Europäisches Patentamt

European Patent Office

Office européen des brevets

(11) Publication number: **0 060 039**
**B1**

(12) **EUROPEAN PATENT SPECIFICATION**

(45) Date of publication of patent specification: **02.01.86**

(51) Int. Cl.⁴: **G 05 B 19/405, G 05 B 19/42**

(21) Application number: **82300817.2**

(22) Date of filing: **17.02.82**

(54) Numerically controlled machine tool system.

(30) Priority: **06.03.81 JP 31191/81**

(43) Date of publication of application:
**15.09.82 Bulletin 82/37**

(45) Publication of the grant of the patent:
**02.01.86 Bulletin 86/01**

(84) Designated Contracting States:
**BE DE FR GB IT NL SE**

(56) References cited:
**FR-A-2 295 472**
**FR-A-2 356 985**
**US-A-3 783 253**
**US-A-4 204 253**

(73) Proprietor: **KITAMURA KIKAI KABUSHIKI
KAISHA (KITAMURA MACHINERY CO.,LTD.)**
**1870 Toide-Komyoji**
**Takaoka-shi Toyama-ken (JP)**

(72) Inventor: **Kitamura, Koichiro**
**3-11-5 Ekinan Takaoka-shi**
**Toyama-ken (JP)**

(74) Representative: **Wood, Anthony Charles et al
c/o MICHAEL BURNSIDE & PARTNERS
2 Serjeants' Inn Fleet Street
London EC4Y 1HL (GB)**

Courier Press, Leamington Spa, England.

EP 0 060 039 B1

## Description

In recent years, the numerical control has become remarkably popular and it has been used by being incorporated in a large number of machine tools such as machine centers. The principal function of numerical control systems is such that a program tape is prepared and a machine tool is operated in accordance with the tape or alternatively the program data of such tape is stored in the internal memory of the numerical control system and the data are read from the memory to effect the memory-controlled operation. This type of numerical control system has manual data inputting means such as a keyboard which is incorporated in the control panel as an auxiliary function for the tape-controlled operation and the memory-controlled operation thereby allowing the operation in accordance with the manually inputted data. A machine tool equipped with such numerical control system cannot be operated unless a program is inputted to it so that how the machining is to be accomplished is entirely left to the discretion of a programmer and the operator that actually performs the machining is required only to perform the operation of inserting the prepared tape in the system. In fact, the preparation of a program requires a high degree of knowledge and the actual preparation of programs shows that the satisfactory machining cannot be accomplished unless the program is corrected many times through test machining. While there will be no problem with the mass production of limited kinds of parts, a considerable inconvenience would be encountered in the production of a diversity of parts in small quantities.

The present invention has been made in view of these circumstances in the prior art, and it is the primary object of this invention to provide a numerically controlled machine tool including a manually inputted data memory system, and which is so designed that the preparation of a program can be effected, while looking at a drawing, by an operator himself who has the most thorough knowledge about the machining conditions and who performs the actual machining.

The present invention thus permits provision of a numerically controlled machine tool in which with a workpiece actually placed on the work table of the machine tool, the operator himself either actually inputs data manually as desired or he effects the machining through manual operation of the machine so as to successively store the numerical data during the operation, so that when the machining is completed, a program of the series of machining operations is obtained and the machining of the next workpiece can be accomplished automatically through memory-controlled operation of the machine tool in accordance with the thus obtained program.

US—A—4204253 discloses a numerically controlled machine tool system comprising:

a machine tool;

a numerical control system having a memory; and

a manual data input control panel;

said machine tool being connected to said numerical control system and said numerical control system being connected to said control panel; and

said control panel being adapted for manual input of data for transfer as numerical data to said memory of said numerical control system to permit said numerical control system in a control mode to control operation of said machine tool in an automatic mode in accordance with said numerical data.

The present invention is characterised in that

said machine tool also has a manually operable mode (known per se);

said numerical control system has a second mode in which it generates numerical signals representative of positional data of a processing tool during a manual machining operation by said machine tool in its manually operable mode;

there is provided a read/write memory means connected for two-way numerical data transfer to and from each of said numerical control system and control panel;

said memory means including a read/write memory, a controller and a mode selector means whereby selection by the mode selector means of a write mode of said memory permits said controller to control entry into said memory of said manual input data signals from said control panel and said positional data signals from said numerical control system for temporary storage of the data signals in said memory, and whereby selection by the mode selector means of a read mode of said memory permits said controller to transfer stored data in said memory into the memory of said numerical control system for controlling operation of said machine tool in its automatic mode in accordance with said data in said numerical control system memory.

Thus, the memory system according to this invention can be combined with a numerical control system for machine tools with the resulting effects that when the operator sets a material and machines it in a manual data input mode by inputting the data every machining operation block, all the numerical data are stored or alternatively when the operator sets a material and manually operates the machine tool thereby performing the required machining, the numerical data successively produced in the numerical control system in the course of the operations are all stored, whereby each time a part is finished, the stored data are transferred to the internal memory of the numerical control system and the desired program of the part is stored in the internal memory, thereby making is possible thereafter to effect the machining of parts of the same kind through the memory-controlled operation in accordance with the program.

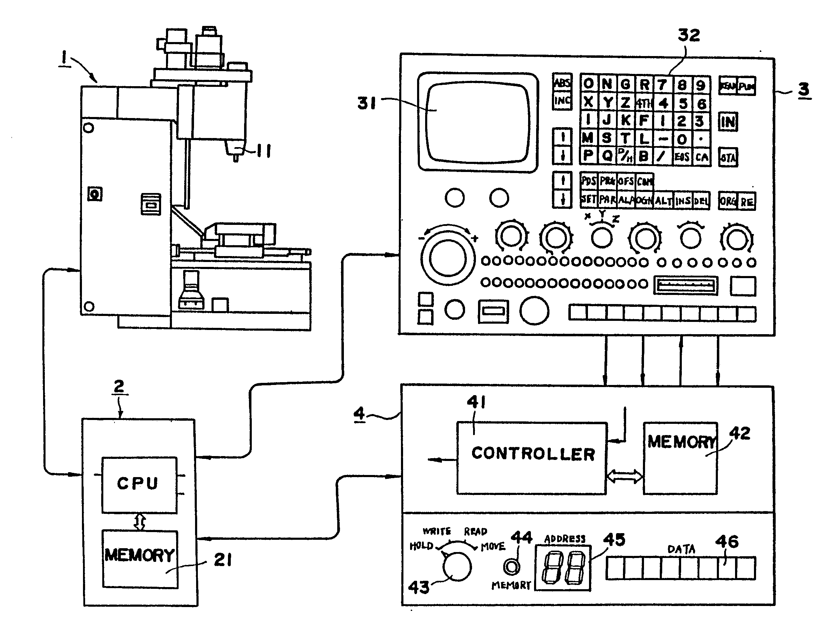

The present invention will be described in greater detail with reference to its preferred embodiment shown in the accompanying drawing.

The single drawing is a schematic diagram showing the system construction of a numerically controlled machine tool incorporating a memory system according to an embodiment of the invention.

In the accompanying drawing showing an embodiment of the invention, numeral 1 designates a machine tool (machining center), and 2 a numerical control system of the machine tool 1. Although the numerical control system 2 is shown as located outside the machine tool 1 for purposes of description, usually it is incorporated in the body portion of the machine tool 1 in many cases. Numeral 3 designates the control panel of the machine tool 1 which is connected to the numerical control system 2 and comprising a cathode ray tube display 31 for displaying the inputted program data, in-process data or the like, a manual data inputting keyboard 32 and various setting and selector switches.

Numeral 4 designates a memory system according to the invention adapted for connection to such a numerically controlled machine tool having a manual data inputting function.

More specifically, the memory system 4 comprises a controller 41 and a read/write memory 42 as well as auxiliary components including a mode selector switch 43, an operation indicator lamp 44, an address indicator 45 and a data indicator 46. The memory system 4 is connected to the control panel 3 so as to receive the numerical data, mode signals and X, Y and Z axis signals inputted manually through the keyboard 32, and the memory system 4 is also connected to the numerical control system 2 so that the data stored in the memory 42 are transferred to the display 31 and an internal memory 21 of the numerical control system 2 and the actual machining command numerical data are supplied from the numerical control system 2 to the memory system 4. The hardware construction of the memory system 4 comprises a microcomputer including a read/write memory device such as a random access memory (RAM) forming the memory 42 and its principal functions comprise sequentially introducing and storing the numerical data obtained when the machine tool is operated with the numerical control system 2 being set in the manual data inputting mode, introducing and storing the numerical signals indicative of the X, Y and Z axis positions of the machining positions which appear in the numerical control system 2 when the machine tool 1 is operated manually and not by the numerical control, and transferring one or the other of these two numerical data sorted in the memory 42 to the internal memory 21 of the numerical control system 2 by means of the control panel 3 in the editing mode of the numerical control system 2. During the transfer of data, the contents of the numerical control system internal memory 21 are displayed on the display 31 so that the program is checked and corrections, if necessary, are made to the program in the numerical control system 2 in the editing mode.

The manually inputted data program transferred to the internal memory 2 and corrected in this way now forms the sufficient machining data for the next workpiece and thus the automatic machining of parts of the same kind can be accomplished by operating the numerical control system 2 in the memory-controlled operation mode.

The above-mentioned functions will now be described in greater detail.

(a) Storing numerical data input during the manual data inputting mode of operation:

The manual data inputting mode of operation is such that the data corresponding to the movements for each block in the memory-controlled operation are inputted by the keyboard 32 thereby operating the machine tool 1. Thus, since the data are inputted by depressing the keys of the keyboard 32 in the order for example of G . . ., X . . ., Y . . ., F . . ., S . . ., M . . ., and then depressing a start key STA thus executing these instructions through the numerical control system 2, it is only necessary to store the data as such as the desired data for the corresponding machining block. It is to be noted here that in the illustrated embodiment the keyboard 32 includes keys O, N, G, R, X, Y, Z, I, J, K, F, M, S, T, L, P, Q, D/H, B, etc., which are address keys and keys 0, 1, 2, 3, 4, 5, 6, 7, 8, 9, etc., which are data keys. Thus, the input data for each block comprises a plurality of signals consisting of an address key signal and the following some data key signals.

It is to be noted that the editing mode differs in some aspects from the manual data inputting mode and the difference resides in the fact that the function of the editing mode is the preparation of a program and naturally there are many conventions which are necessary to reduce the length of the program and allow the maximum operation of the machine. For this purpose, the memory system 4 incorporates a control sequence by means of an ROM (read-only memory) or the like so as to make the maximum use of the conventions in the editing mode for storing purposes. For instance, the program number address key O, the sequence number address key N and the end of block address key EOB are not essentially used in the manual data inputting mode of operation. The purpose of the address key O is to give a number to a program and the O number is a very important instruction for calling a subprogram. In the manual data inputting mode, however, there exists no subprogram and thus this instruction is essentially ignored. On the other hand, when data are to be stored in the memory 42, the O number is given to the data so that the subprogram control is effected. If the O number is not present, the same positioning operation is required each time the tool changing is performed. The sequence number key N is provided to give block numbers to the data and it essentially has no significance in the manual data inputting mode. However, this key is necessary to know at a later time which operation is being performed in the execution of the program. Thus, as a function of the controller 41, the memory system 4 automatically and sequentially increases the sequence number by one and stores it for every block. Lastly, the end-of-block key EOB is used when the edition of one block is completed and the control is to be transferred to the next block. Thus, since this can be ignored completely in the manual data inputting mode of operation, it is arranged so that in the manual data inputting mode the controller 41 automatically writes the address EOB into the memory 42 when the start key STA is depressed.

Described so far are the measures required to deal with the address keys which are not essentially used in the manual data inputting mode of operation, and it is necessary to arrange particularly with respect to the O instruction so that the storage of data in the memory system 4 does not take place as a principle unless the O instruction is used. As regards the utilization of the O instruction, if, for example, the data input for a certain block is PαM98CR (STA), this means the calling of a program number α of the subprogram and therefore the controller 41 must automatically read out the program α. In this case, since the program data have been incorporated in the program α, the controller 41 must also have the function of automatically transferring the data to the internal memory 21 of the numerical control system 2. Note that since the program α could not be present from the very beginning, it is arranged so that when a program number search fails to find the data in question, the non-existence of the data is displayed on the display 31. In this case, this kind of instruction without data is disregarded in the numerical control system 2 and thus no special countermeasure is required.

In the foregoing description, if, in the course of the manual data inputting mode of operation, wrong data are inputted and executed or a reset button RE is depressed so that the block is cancelled inevitably for the purpose of averting danger, the data stored in the memory 42 must be corrected. In this case, while the operations may be performed again from the beginning in the order of machining, it is expedient to call the blocks which are earlier in sequence number by two or three blocks than that which was stopped and start the machining again thereat. As a result, it is arranged so that a sequence number can be indicated on the indicator 45 and also the mode selector switch 43 can be moved to its "READ" position to effect the sequence calling. In this case, it is also necessary to operate the machine in the memory-controlled mode with respect to the several blocks and then make corrections to the block in question. In other words, when any trouble occurs, the operator first ascertains the sequence number of the block in question on the indicator 45 and then checks at the "READ" position what data are stored in the preceding blocks. In this case, it is only necessary that the machine tool 1 is set in the condition existed prior to the block which is to be executed essentially so that the machine tool 1 is operated in a single-block fashion with respect to the several blocks and then upon reaching the block in question the mode selector switch 43 is returned to the "WRITE" mode thereby starting again the manual data inputting mode of operation.

(b) Storage of numerical signals during the manual operation:

Differing from the above-described (a), this is the storage of numerical data during the machining of a work through the manual operation of the machine tool 1. In this case, the positional data of the X, Y and Z axes of the machine tool 1 are generated as numerical data from the numerical control system 2 so that these numerical signals are taken and stored in the memory 42. In this case, at the control panel 3 the operating mode of the machine tool 1 is changed to the manual mode of operation and then any one of the axes X, Y and Z is selected thereby manually effecting the movement of the selected axes. Then, an input key IN is depressed so that the resulting positional data are taken and stored in the memory 42 virtue of the function of the controller 41. In this case, the requirement for the preparation of a program is the logic product of the fact that the machine tool is in the manual mode of operation and the fact that the input key has been depressed.

(c) Transfer of stored data:

The data stored in the memory 42 as a result of the above-described (a) or (b) form an independent program upon completion of the machining of a work in the main. When the same machining is required, the thus stored data are transferred to the internal memory 21 of the numerical control system 2 and the following two methods are available for this purpose.

In accordance with the first method, in the manual data inputting mode the memory system 4 is set to the "READ" position by its mode selector switch 43 and then the start key STA is depressed. As a result, the memory system 4 transfers the data for one block stored in the memory 42 to the internal memory 21 of the numerical control system 2 by means of the control panel 3 and simultaneously an automatic start is made thereby executing the block. Upon completion of the block the start key STA is depressed again so that the transfer and execution of the data of the next block are effected. In other words, this method serves the similar function as the single-block operation and it is suitable for the same machining of a small number of works.

The second method consists of transferring once all the data in the memory 42 to the internal memory 21 of the numerical control system 2 and then executing the data and this method is well suited for use in applications where the same machining is repeated in excess of a certain extent. In this case, the numerical control system 2 is placed in the editing mode through the control panel 3 and also the "MOVE" position is selected by the switch 43 in the memory system 4. Thus, the transfer of the data is effected in response to the depression of the start key STA and during the transfer the transferred data are sequentially displayed on the display 31 thus making it possible to confirm the contents of the program. In this case, it is also possible to correct, increase and delete the contents of the program. When the transfer of the data to the internal memory 21 is completed, the role of the memory system 4 is over. When the operating mode is set to the memory-controlled operation and the start key STA is depressed in the control panel 3, the numerical control system 2 causes the machine tool 1 to perform the same machining in the memory-controlled operating mode. In this case, the data stored in the memory 42 may be backed up in a suitable manner. In the Figure, the "HOLD" position of the mode selector switch 43 stops all the functions of the memory system 4 and the indicator 44, 45 and 46 are turned on only in response to the other positions.

From the foregoing description it will be seen that in accordance with the present invention, by virtue of the fact that the manual data inputting function which has heretofore been performing only an assisting role for the tape-controlled operation or the memory-controlled operation is now changed to an independent and useful function owing to the storage of the inputted data and that the desired machining data are successively stored while actually operating a machine tool, there are many industrial effects that upon satisfactory completion of a part the corresponding program is prepared, that is the operator is allowed to think on his own will and prepare the desired program by himself thereby helping the operator to promote his understanding of numerically controlled machines, that differing from the conversational programming there is no limitation to data to be inputted and thus the system can be combined with any type of numerically controlled machine tool so as to easily prepare a program which allows the machine tool to make a variety of movements, that the processing of data is performed by a controller comprising a microcomputer whose microprogram can be selected and modified so as to provide complex movements which were not known before and so on.

## Claim

A numerically controlled machine tool system comprising:
a machine tool (1);
a numerical control system (2) having a memory (21); and
a manual data input control panel (3);
said machine tool being connected to said numerical control system and said numerical control system being connected to said control panel; and
said control panel (3) being adapted for manual input of data for transfer as numerical data to said memory (21) of said numerical control system (2) to permit said numerical control system in a control mode to control operation of said machine tool in an automatic mode in accordance with said numerical data;
characterised in that:
said machine tool (1) also has a manually operable mode;
said numerical control system (2) has a second mode in which it generates numerical signals representative of positional data of a processing tool during a manual machining operation by said machine tool in its manually operable mode;
there is provided a read/write memory means (4) connected for two-way numerical data transfer to and from each of said numerical control system (2) and said control panel (3);
said memory means (4) including a read/write memory (42), a controller (41) and a mode selector means (43), whereby selection by the mode selector means of a write mode of said memory (42) permits said controller (41) to control entry into said memory (42) of said manual input data signals from said control panel (3) and said positional data signals from said numerical control system (2) for temporary storage of the data signals in said memory (42), and whereby selection by the mode selector means (43) of a read mode of said memory (42) permits said controller (41) to transfer stored data in said memory (42) into the memory (21) of said numerical control system (2) for controlling operation of said mchine tool in its automatic mode in accordance with said data in said numerical control system memory (21).

## Patentanspruch

Numerisch gesteuertes Werkzeugmaschinensystem
mit einer Werkzergmaschinen (1),
einer numerischen Steuerung (2) mit einem Speicher (21) und
einem Steuerpult (3) für manuellen Dateneingang,
wobei die Werkzeugmaschine mit der numerischen Steuerung und die numerische Steuerung mit dem Steuerpult verbunden ist,
und das Steuerpult (3), das für den manuellen Dateneingang ausgeführt ist, numerische Daten auf den Speicher (21) der numerischen Steuerung (2) derart überträgt, daß die numerische Steuerung in der Steuereinstellung die Betätigung der Werkzeugmaschine nach Maßgabe der numerischen Daten selbsttätig steuert, dadurch gekennzeichnet,
daß die Werkzeugmaschine (1) gleichfalls über eine Handbetätigungseinstellung verfügt,
und daß die numerische Steuerung in einer zweiten Einstellung numerische Signale entsprechend der Werkzeugstellung während einer Handbetätigung in der Handbetätigungseinstellung generiert und
daß ein Schreib/Lese-Speichermittel (4) für eine zweiwegige, numerische Datenübertragung zu und von der numerischen Steuerung (2) und dem Steuerpult (3) besteht, wobei das Schreib/Lese-Speichermittel (4) einen Schreib/Lese-Speicher (42), ein Steuergerät (41) und einen Einstellwahlschalter (43) derart besitzt,

daß bei Wahl des Schreib-Modus des Speichers (42) durch den Einstellschalter das Steuergerät (41) einen Eingang

der manuell eingegebenen Datensignale vom Steuerpult (3) in den Speicher (42), und

der Stellungsdatensignale von der numerischen Steuerung für eine Vorübergehende Speicherung dieser Datensignale im Speicher (42) schaltet, und

daß bei Wahl des Lese-Modus durch een Einstellschalter (43) das Steuergerät (41) gespeicherte Daten aus dem Speicher (42) in den Speicher (21) der numerischen Steuerung (2) für die selbsttätige Steuerung der Werkzeugmaschine entsprechend den Daten des Speichers (21) der numerischen Steuerung überträgt.

**Revendication**

Un système de machine-outil à commande numérique comprenant:

une machine-outil (1);

un système de commande numérique (2) pourvu d'une mémoire (21); et

un panneau de commande (3) d'entrée manuelle des données;

ladite machine-outil étant connectée audit système de commande numérique et ledit système de commande numérique étant connecté audit panneau de commande, et

ledit panneau de commande (3) étant conçu pour l'entrée manuelle des données pour leur transfert sous forme de données numériques à ladite mémoire (21) dudit système de commande numérique (2) pour permettre audit système de commande numérique en mode commande de commander le fonctionnement de ladite machine-outil en mode automatique conformément auxdites données numériques; caractérisé en ce que:

ladite machine-outil (1) a également un mode de commande manuelle;

ledit système de commande numérique (2) a un second mode dans lequel il produit des signaux numériques représentatifs des données de position d'un outil d'usinage pendant une opération d'usinage manuel effectuée par ladite machine-outil dans son mode de commande manuelle;

on dispose d'un moyen de mémoire de lecture/écriture (4) connectée de façon à assurer le transfert aller-retour de données numériques vers et à partir dudit système de commande numérique (2) et dudit panneau de commande (3);

ledit moyen de mémoire (4) comprenant une mémoire lecture/écriture (42), un contrôleur (41) et un moyen sélecteur de mode (43), la sélection par le moyen sélecteur de mode d'un mode écriture de ladite mémoire (42) permettant audit contrôleur (41) de commander l'entrée dans ladite mémoire (42) desdits signaux de données d'entré manuelle depuis ledit panneau de commande (3) et lesdits signaux de données de position depuis ledit système de commande numérique (2) pour la mémorisation temporaire des signaux de données dans ladite mémoire (42), tandis que la sélection par le moyen sélecteur de mode (43) d'un mode lecture de ladite mémoire (42) permet audit contrôleur (41) de transférer les données mémorisées dans ladite mémoire (42) dans la mémoire (21) dudit système de commande numérique (2) pour commander le fonctionnement de ladite machine-outil en mode automatique conformément auxdites données dans ladite mémoire (21) du système de commande numérique.

0 060 039

32
31
3
1
11

ABS INC
O N G R 7 8 9 RAM PUN
X Y Z 4TH 4 5 6
I J K F 1 2 3 IN
M S T L — 0 .
P Q %H B / EOB CA STA
PDS PRG OFS COM
SET PAR ALA OGN ALT INS DEL ORG RE

X Y Z

4
41 CONTROLLER
MEMORY 42

2
CPU
MEMORY 21

WRITE READ
HOLD MOVE
43 44 MEMORY
ADDRESS 45
DATA 46